# EUROPÄISCHE PATENTSCHRIFT

(11) **EP 2 723 616 B1**
(45) Veröffentlichungstag und Bekanntmachung des Hinweises auf die Patenterteilung: **12.04.2017**
(21) Anmeldenummer: 12725722.8
(22) Anmeldetag: 01.06.2012
(51) Int. Cl.: B60S 9/08

(54) **STÜTZVORRICHTUNG FÜR NUTZFAHRZEUGE**
SUPPORT DEVICE FOR COMMERCIAL VEHICLES
DISPOSITIF D'APPUI POUR VÉHICULES UTILITAIRES

(30) Priorität: 24.06.2011 DE 102011078065
(43) Veröffentlichungstag der Anmeldung: 30.04.2014
(73) Patentinhaber: SAF-HOLLAND GmbH, 63856 Bessenbach (DE)
(72) Erfinder: RIEDL, Reinhold, 63897 Miltenberg (DE)
(74) Vertreter: Müller Schupfner & Partner Patent- und Rechtsanwaltspartnerschaft mbB
(86) Internationale Anmeldenummer: PCT/EP2012/060326
(87) Internationale Veröffentlichungsnummer: WO 2012/175312

(56) Entgegenhaltungen:
- DE-C2- 19 836 635
- DE-U1-202009 006 892
- US-A1- 2008 222 872

## Beschreibung

Die Erfindung bezieht sich auf eine Stützvorrichtung für Nutzfahrzeuge, insbesondere eine höhenverstellbare Stütze für Sattelauflieger oder dergleichen.

Derartige Stützen sind paarweise vorn an Sattelaufliegern angebracht und können im Schnellgang in Abstütz- oder Transportstellung gebracht und im Lastgang zum Anheben des vorderen Bereichs des Sattelaufliegers benutzt werden, wenn das beim Aufsatteln erforderlich wird.

Eine Stütze der in Rede stehenden Art ist aus der DE 198 36 635 C5 bekannt. Bei dieser so genannten Vorrichtung zum Abstützen eines Aufliegers eines Sattelschleppers befinden sich die Zahnräder größtenteils innerhalb des Stützenaußenrohres. Dabei ist auf der Getriebeausgangswelle ein durchmessergroßes Zahnrad angeordnet, das im Lastgangbetrieb über ein auf der Getriebeeingangswelle befindliches Ritzel angetrieben wird. Die Getriebeeingangswelle befindet sich in einer vertikalen Ebene mit der Getriebeausgangswelle und unterhalb dieser. Außerdem ist konzentrisch zur Getriebeeingangswelle ein ebenfalls durchmessergroßes Zahnrad der Schnellgangstufe angeordnet. Aufgrund dieser vertikalen Räderanordnungen ist der höhenmäßig benötigte Getriebebauraum sowohl oberhalb der Getriebeeingangswelle als auch unterhalb der Getriebeausgangswelle groß.

Die DE 20 2009 006 892 U1 betrifft eine höhenverstellbare Stütze für Sattelauflieger mit einem ortsfest angebrachten Stützenaußenrohr, einem darin angeordneten verschiebbaren Stützeninnenrohr, das mit einer Mutter verbunden ist, die sich auf einer Spindel befindet, welche über ein Getriebe, das mindestens eine Kegelradstufe und einen vorgelagerten umschaltbaren Getriebebereich mit stirnverzahnten Zahnrädern für den Schnellgangbetrieb und den Lastgangbetrieb aufweist, antreibbar ist.

Die US-2008/0222872 A1 betrifft eine Stützvorrichtung für Nutzfahrzeuge mit einem Stützenaußenrohr und einem in dem Stützenaußenrohr verlagerbaren Stützeninnenrohr, welches über einen Spindeltrieb antreibbar ist, welcher mit einem Getriebe in Verbindung steht.

Der Erfindung liegt die Aufgabe zugrunde, eine Stützvorrichtung für Nutzfahrzeuge vorzuschlagen, bei der das Stützeninnenrohr weit in das Stützenaußenrohr einfahrbar ist und bei regulär ausgefahrenem Stützeninnenrohr dessen sichere Restführung im Stützenaußenrohr gewährleistet ist. Außerdem soll der Bau besonders kurzer, d.h. niedriger Stützvorrichtungen mit größtmöglichem Hub bei einer, gemäß verkehrstechnischer Erfordernisse im Fahrbetrieb großen Bodenfreiheit erzielt werden.

Diese Aufgabe wird durch eine Stützvorrichtung gemäß Anspruch 1 gelöst. Bevorzugte Ausführungsformen sind Gegenstand der abhängigen Ansprüche.

Erfindungsgemäß ist eine Stützvorrichtung für Nutzfahrzeuge, wie Anhänger oder Sattelauflieger, vorgesehen, umfassend ein Stützenaussenrohr, welches an einem Chassis des Nutzfahrzeugs festlegbar ist, und ein Stützeninnenrohr, welches im Stützenaussenrohr verlagerbar angeordnet ist, wobei das Stützeninnenrohr mit einer Mutter verbunden ist, die mit einer Spindel in Eingriff steht, welche über ein Getriebe antreibbar ist, wobei das Getriebe eine Abtriebswelle, eine Kegelradstufe und einen umschaltbaren Bereich aufweist, wobei der umschaltbare Bereich aus einem auf der Abtriebswelle festgelegten Lastgangzahnrad und Schnellgangritzel, einem Lastgang-Zwischenzahnradsatz mit einem Lastgang-Zwischenzahnrad und einem Lastgang-Zwischenritzel, welches mit dem Lastgangzahnrad in Eingriff steht, einem Schnellgangzahnrad, welches mit dem Schnellgangritzel in Eingriff steht, und einem wahlweise mit dem Lastgang-Zwischenzahnrad oder Schnellgangzahnrad in Eingriff bringbaren Lastgangritzel, wobei die Rotationsachsen des Lastgang-Zwischenzahnradsatzes und des Lastgangritzels in unterschiedlichen vertikalen Ebenen und unterhalb der Rotationsachse der Abtriebswelle angeordnet sind. Bei der erfindungsgemäßen Stütze ist zunächst in bekannter Weise auf der Abtriebswelle des Getriebes ein relativ kleines Lastgangzahnrad vorgesehen, was den Abstand zwischen der Abtriebswelle und dem oberen Stützenende vorteilhaft gering gestaltet. Hierdurch kann eine Stützvorrichtung ermöglicht werden, bei der die Bauhöhe eines innerhalb des Stützenaußenrohres befindlichen Getriebes gering ist. Der Begriff vertikale Ebene ist dahin gehend zu verstehen, dass diese in Stützenlängsrichtung bzw. der Ein-/Ausfahrrichtung des Stützeninnenrohrs in das Stützenaussenrohr und parallel zur Rotationsachse der Abtriebswelle liegt. Entsprechend liegt die horizontale Ebene senkrecht zur vertikalen Ebene und parallel zur Rotationsachse der Abtriebswelle. Das Stützeninnenrohr ist in geeigneter Weise in einer vertikalen Richtung, die auf der vertikalen Ebene liegt, in das Stützenaussenrohr ein- und ausfahrbar. Das Stützeninnenrohr ist vorteilhafterweise unmittelbar - bspw. über eine Verschweißung, Verklebung oder einen Form- und/oder Reibschluß - oder über zwischengeschaltete Element - wie eine Verschraubung - mit der Mutter verbunden. Zweckmäßigerweise liegen die Rotationsachsen des Lastgang-Zwischenzahnradsatzes und des Lastgangritzels unterhalb der Abtriebswelle. Vorteilhafterweise steht das Lastgang-Zwischenritzel mit dem Lastgangzahnrad in Eingriff.

Wenn vorteilhafterweise der Lastgang-Zwischenzahnradsatz und die Antriebswelle oder alternativ das am Triebstück befindliche Ritzelkupplungsteil nicht senkrecht unterhalb, sondern entgegengesetzt seitlich verlagert unter der Abtriebswelle angeordnet werden, ergibt sich vorteilhafter Weise für die Getriebeelemente insgesamt ein sehr geringer Bauhöhenbedarf im Stützenaußenrohr. Das ermöglicht, dass die Spindel im Lagerungsbereich kürzer ist und die das Stützeninnenrohr tragende Mutter weit einfahren kann. Außerdem wird das Stützenrohr bezüglich der Ausbildung seines oberen Bereiches aufwandsmäßig günstig beeinflußt.

Vorteilhafterweise liegen die Rotationsachsen des Lastgang-Zwischenzahnradsatzes und des Schnellgangzahnrads in unterschiedlichen vertikalen Ebenen und unterhalb der Abtriebswelle.

Vorzugsweise liegen das Schnellgangzahnrad und das Lastgangritzel auf derselben Rotationsachse.

Erfindunsgemäß liegt die Rotationsachse der Spindel zwischen den Rotationsachsen des Lastgang-Zwischenzahnradsatzes und des Lastgangritzels.

In einer bevorzugten Ausführungsform sind die Rotationsachsen der Abtriebswelle, des Lastgang-Zwischenzahnradsatzes und des Lastgangritzels parallel zueinander angeordnet.

Vorteilhafterweise liegen die Rotationsachsen des Lastgang-Zwischenzahnradsatzes und des Lastgangritzels in unterschiedlichen horizontalen Ebenen.

Zweckmäßigerweise liegt die Rotationsachse des Lastgang-Zwischenzahnradsatzes in einer horizontalen Ebene, die näher an der Rotationsachse der Abtriebswelle liegt als die horizontale Ebene, in der die Rotationsachse des Lastgangritzels liegt.

Bevorzugt ist das Lastgangritzel an einem Ritzelkupplungsteil festgelegt, welches vorzugsweise gemeinsam mit der Spindel in einem Lagerelement gelagert ist.

Vorzugsweise ist ein Triebstück oder eine Antriebswelle vorgesehen, das/die ausgelegt ist, eine Rotationskraft auf das Lastgangritzel vorzugsweise über einen Eingriff mit dem Ritzelkupplungsteil auszuüben.

Zweckmäßigerweise ist an einem distalen Endbereich des Stützeninnenrohrs ein Fuß vorgesehen.

Weitere Merkmale und Vorteile der Erfindung werden anhand beispielhafter Ausführungsformen mit Bezug auf die nachfolgenden Figuren beschrieben. Es zeigt:
- Fig. 1: eine Vorderansicht einer bevorzugten Ausführungsform der erfindungsgemäßen Stützvorrichtung,
- Fig. 2: eine Seitenansicht der in Fig.1 gezeigten Stützvorrichtung
- Fig. 3: einen Längsschnitt der in Fig.1 gezeigten Stützvorrichtung entlang der Linie A-A und
- Fig. 4: einen Längsschnitt der in Fig.2 gezeigten Stützvorrichtung entlang der Linie B-B in alternativer Ausgestaltung zu Fig.3.

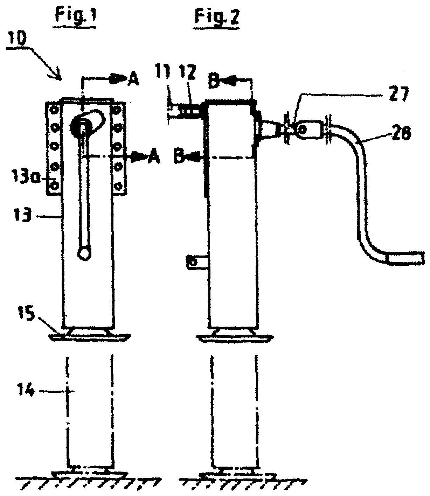

Die in **Figs.1 bis 4** gezeigte Stütze bzw. Stützvorrichtung 10 wird paarweise an einem Nutzfahrzeug, wie einem Sattelauflieger, eingesetzt und jedes Paar ist mittels einer Verbindungswelle 11 zwischen den Abtriebswellen 12 antriebsmäßig miteinander verbunden. In Transportstellung sind die Stützen eingefahren, d.h. in verkürztem Zustand. Bevor der Sattelauflieger vom Sattelschlepper abgekoppelt wird, werden sie ausgefahren. Die Stütze 10 weist ein Stützenaußenrohr 13 und ein darin längsverschiebbar angeordnetes Stützeninnenrohr 14 auf. Das Stützenaußenrohr 13 und das Stützeninnenrohr 14 besitzen vorzugsweise quadratische Querschnitte. Die Stütze 10 wird über eine am Stützenaußenrohr 13 befindliche Anschraubplatte 13a am Chassis des Sattelaufliegers befestigt. Am unteren Ende des Stützeninnenrohres 14 befindet sich ein Fuß 15 zum Aufsetzen auf den Boden.

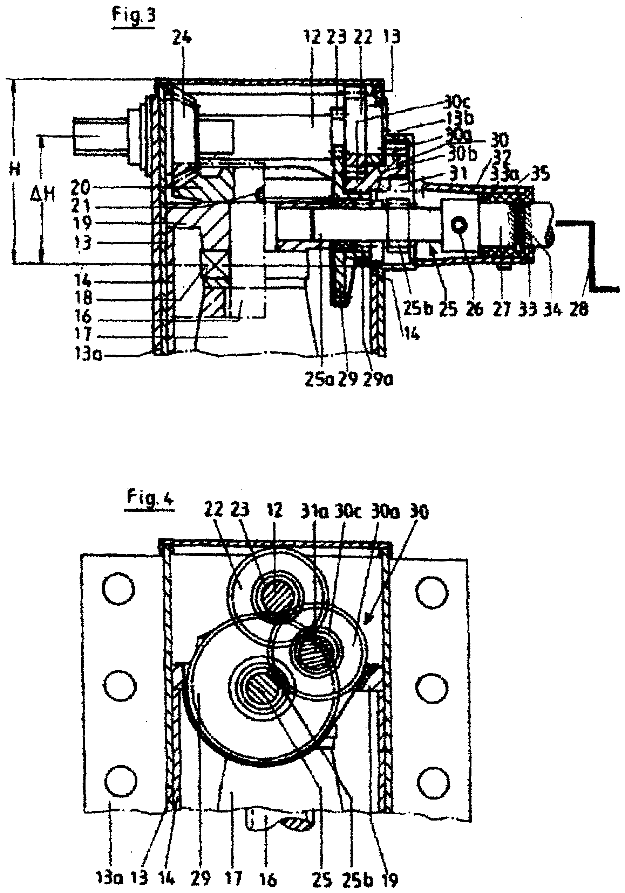

Wie **Fig. 3** zeigt, weist die Stütze 10 eine Spindel 16 mit einer Mutter 17 auf. Die Mutter 17 ist mit dem Stützeninnenrohr 14 verbunden (nicht gezeigt). Auf einer Scheibe auf der Schulter der Spindel 16 sitzt ein Axiallager 18, das sich an einen im Stützenaußenrohr 13 befestigten Lagerelement bzw. Lagerungenteil 19 abstützt.

Oberhalb des Lagerungenteils 19 befindet sich ein Tellerrad 20, das mittels eines Stifts 21, der die Spindel 16 trägt, drehfest mit der Spindel 16 verbunden ist. Über dem Tellerrad 20 ist die Abtriebswelle 12 im Stützenaußenrohr 13 gelagert.

Auf dem vorderen Bereich der Abtriebswelle 12 sitzen jeweils drehfest angebracht ein Lastgangzahnrad 22 sowie ein Schnellgangritzel 23 und ein Kegelritzel 24. Der Kopfkreisdurchmesser des Lastgangzahnrades 22 ist konzeptionell klein dimensioniert, so dass von der Mitte der Abtriebswelle 12 bis zum oberen Ende der Stütze 10 lediglich ein geringer Bauhöhenanteil besteht.

Im Lagerungenteil 19 ist vertikal die Spindel 16 und in horizontaler Anordnung ein axial verschiebbares Ritzel-Kupplungsteil 25 gelagert.

Das Ritzel-Kupplungsteil 25 ist seitlich versetzt unterhalb der Abtriebswelle 12 angeordnet und weist einen Lagerzapfen 25a sowie eine Verzahnung als Lastgangritzel 25b auf. Es ist über eine Schäftung mittels eines Spannstifts 26 mit einem Triebstück 27 verbunden.

Am äußeren Ende des Triebstücks 27 ist eine abschwenkbare Handkurbel 28 befestigt.

Der Lagerzapfen 25a dient neben der Lagerung des Ritzel-Kupplungsteils 25 auch zur Lagerung eines Schnellgangzahnrades 29, das dem auf der Abtriebswelle 12 sitzenden Schnellgangritzel 23 zugeordnet ist. Im Schnellgangzahnrad 29 befindet sich eine Kuppelverzahnung 29a. Höhenmäßig zwischen dem Ritzel-Kupplungsteil 25 und der Abtriebswelle 12 befindet sich in paralleler Achsanordnung ein Lastgang-Zwischenzahnradsatz 30, der gegenüber der Abtriebswelle 12 seitlich versetzt ist. Dagegen ist das Ritzel-Kupplungsteil 25 spiegelbildlich zum Lastgang-Zwischenzahnradsatz 30 seitlich von der Abtriebswelle 12 angeordnet.

Diese höhenmäßig und seitlich versetzten Anordnungen ergeben innerhalb des Stützeninnenrohres 14 eine sehr kompakte Bauweise des Getriebes. Dabei beeinflusst unterhalb der Rotationsachse der Abtriebswelle 12 lediglich im Bereich ΔH das Getriebe die partielle Ausgestaltung des Stützeninnenrohres 14. Zusammen mit dem geringen erforderlichen Bauraum von der Abtriebswelle 12 bis zum oberen Ende der Stütze entspricht die für das Getriebe benötigte gesamte Bauhöhe lediglich den mit H gekennzeichneten Bereich im Stützenaußenrohr 13.

Der Lastgang-Zwischenzahnradsatz 30 besteht aus einem Lastgang-Zwischenzahnrad 30a mit dem die Verzahnung des Lastgangritzels 25b zusammenwirken kann, einem Lagerbereich 30b sowie einem Lastgang-Zwischenritzel 30c, das in das Lastgangzahnrad 22 eingreift. Außerdem weist der Lastgang-Zwischenzahnradsatz 30 stirnseitig einen Innenlagerbereich auf.

Die Lagerung des Lastgang-Zwischenzahnradsatzes 30 erfolgt mittig mit seinem Lagerbereich 30b in einem partiell verstärkten Wandungsteil am Stützenaußenrohres 13 und endseitig mit seinem Innenlagerbereich auf einem an einem Ausprägungsbereich 13b der Vorderwand des Stützenaußenrohres 13 befindlichen Königszapfen 31.

Eine am Ausprägungsbereich 13b des Stützenaußenrohres 13 befestigte Lagerhülse 32 weist einen mit einer Bundbuchse 33 ausgestatteten Lagerbereich für das Triebstück 27 auf. In der Bundbuchse 33 befinden sich zwei Radialnuten 33a in die wechselweise eine in das Triebstück 27 eingebaute Kugelarretierung 34 einrasten kann.

Die Getriebefunktionen der Stütze 10 sind wie folgt:
Für den Lastgangbetrieb ist die Verzahnung des Lastgangritzels 25b in Eingriffstellung mit dem Lastgang-Zwischenzahnrad 30a, wobei die Kugelarretierung 34 im Triebstück 27 zur axialen Fixierung des Ritzel-Kupplungsteiles 25 in die vordere Radialnut 33a eingerastet ist.

Wie in **Fig.3** mit Pfeillinien gezeigt, erfolgt beim Drehen der Handkurbel 28 der Kraftfluß vom Triebstück 27 zunächst in das Ritzel-Kupplungsteil 25 und von dort über die Verzahnung des Lastgangritzels 25b weiter auf das Lastgang-Zwischenzahnrad 30a des Lastgang-Zwischenzahnradsatzes 30. Das Lastgang-Zwischenritzel 30c überträgt die Kraft auf das Lastgangzahnrad 22 und somit in die Abtriebswelle 12. Der Kraftfluß verzweigt sich dann in einen ersten Teil, der über das Kegelritzel 24 und das Tellerrad 20 in die Spindel 16 eingeleitet wird, um die Mutter 17 mit dem daran befestigten Stützeninnenrohr 14 zu bewegen, und einen zweiten Teil, der am Zapfen der Abtriebswelle 12 zur Weiterleitung über die Verbindungswelle 11 zum Antreiben der Nachbarstütze zur Verfügung steht.

Beim Schnellgangbetrieb ist das Ritzel-Kupplungsteil 25 in Richtung zur Mitte der Stütze 10 verschoben (nicht gezeigt), so dass die Verzahnung des Lastgangritzels 25b mit seinem vorderen Bereich in die volle Tiefe der Kuppelverzahnung 29a des Schnellgangzahnrades 29 eintaucht, wodurch eine formschlüssige Koppelung des Ritzelkupplungsteils 25 mit dem Schnellgangzahnrad 29 besteht. Die Kugelarretierung 34 ist dabei in die hintere Radialnut 33a eingerastet.

Zwischen der Schaltstellung des Ritzel-Kupplungsteils 25 für den Lastgang und der für den Schnellgang ist eine Freischaltung möglich, in der die Verzahnung des Lastgangritzels 25b außer Eingriff ist. Während des Umschaltens kann, wenn erforderlich, über diese Freischaltung durch eine kleine Leerlaufbewegung das Ritzel-Kupplungsteil 25 leicht in Eingriff mit der Kuppelverzahnung 29a des Schnellgangzahnrades 29 oder mit der Verzahnung des Lastgang-Zwischenrades 30a gebracht werden.

Zweckmäßigerweise ist somit eine höhenverstellbare Stütze 10 für Sattelauflieger oder dergleichen vorgesehen, umfassend ein am Chassis des Sattelaufliegers zu befestigendem Stützenaußenrohr 13, ein im Stützenaußenrohr 13 angeordnetes verschiebbares Stützeninnenrohr 14, an dessen unteren Endbereich ein Fuß 15 befestigt ist und das mit einer Mutter 17 verbunden ist, die sich auf einer Spindel 16 befindet, welche ein Getriebe mit mindestens einer Kegelradstufe 24,20 und davor einen umschaltbaren Bereich mit einem Schnellgangzahnrad 29 und Schnellgangritzel 23 sowie einem Lastgangritzel 25b mit einem Lastgangzahnrad 30a besitzt, sowie einen Lastgang- Zwischenzahnradsatz 30 aufweist, wobei ein an einem Triebstück 27 befindliches Ritzel-Kupplungsteil 25 oder eine Antriebswelle gemeinsam mit der Spindel 16 in einem Lagerungenteil 19 gelagert ist, wobei die Rotationsachse des Zwischenzahnradsatzes 30 und die Rotationsachse des Triebstücks 27 und des Ritzel-Kupplungsteils 25 oder der Antriebswelle unterhalb der Abtriebswelle 12 in unterschiedlichen vertikalen Ebenen liegen, die sich seitlich der Achse der Spindel 16 befinden. Vorteilhafterweise ist das Kegelritzel 24 an der Rückseite des Stützenaußenrohres 13 angeordnet.

### Bezugszeichenliste

- 10: Stütze
- 11: Verbindungswelle
- 12: Abtriebswelle
- 13: Stützenaußenrohr
- 13a: Anschraubplatte
- 13b: Ausprägungsbereich
- 14: Stützeninnenrohr
- 15: Fuß
- 16: Spindel
- 17: Mutter
- 18: Axiallager
- 19: Lagerungenteil
- 20: Tellerrad
- 21: Stift
- 22: Lastgangzahnrad
- 23: Schnellgangritzel
- 24: Kegelritzel
- 25: Ritzel-Kupplungsteil
- 25a: Lagerzapfen
- 25b: Verzahnung des Lastgangritzels
- 27: Triebstück
- 28: Handkurbel
- 29: Schnellgangzahnrad
- 29a: Kuppelverzahnung
- 30: Lastgang-Zwischenzahnradsatz
- 30a: Lastgang-Zwischenzahnrad
- 30b: Lagerbereich
- 30c: Lastgang-Zwischenritzel
- 31: Königszapfen
- 32: Lagerhülse
- 33: Bundbuchse
- 33a: Radialnut
- 34: Kugelarretierung

## Patentansprüche

1. Stützvorrichtung für Nutzfahrzeuge, wie Anhänger oder Sattelauflieger, umfassend
ein Stützenaussenrohr (13), welches an einem Chassis des Nutzfahrzeugs festlegbar ist, und ein Stützeninnenrohr (14), welches im Stützenaussenrohr (13) verlagerbar angeordnet ist,
wobei das Stützeninnenrohr (14) mit einer Mutter (17) verbunden ist, die mit einer Spindel (16) in Eingriff steht, welche über ein Getriebe antreibbar ist,
wobei das Getriebe eine Abtriebswelle (12), eine Kegelradstufe (20, 24) und einen umschaltbaren Bereich aufweist,
wobei der umschaltbare Bereich aus
einem auf der Abtriebswelle festgelegten Lastgangzahnrad (22) und Schnellgangritzel (23),
einem Lastgang-Zwischenzahnradsatz (30) mit einem Lastgang-Zwischenzahnrad (30a) und einem Lastgang-Zwischenritzel (30c), welches mit dem Lastgangzahnrad (22) in Eingriff steht,
einem Schnellgangzahnrad (29), welches mit dem Schnellgangritzel (23) in Eingriff steht, und
einem wahlweise mit dem Lastgang-Zwischenzahnrad (30a) oder
Schnellgangzahnrad (29) in Eingriff bringbaren Lastgangritzel (25b), **dadurch gekennzeichnet, dass** die Rotationsachsen des Lastgang-Zwischenzahnradsatzes (30) und des Lastgangritzels (25b) in unterschiedlichen vertikalen Ebenen und unterhalb der Rotationsachse der Abtriebswelle (12) angeordnet sind, und dass die Rotationsachse der Spindel (16) zwischen den Rotationsachsen des Lastgang-Zwischenzahnradsatzes (30) und des Lastgangritzels (25b) liegt.

2. Stützvorrichtung nach Anspruch 1, wobei die Rotationsachsen des Lastgang-Zwischenzahnradsatzes (30) und des Schnellgangzahnrads (29) in unterschiedlichen vertikalen Ebenen und unterhalb der Abtriebswelle (12) liegen.

3. Stützvorrichtung nach einem der vorhergehenden Ansprüche, wobei das Schnellgangzahnrad (29) und das Lastgangritzel (25b) auf derselben Rotationsachse liegen.

4. Stützvorrichtung nach einem der vorhergehenden Ansprüche, wobei die Rotationsachsen der Abtriebswelle (12), des Lastgang-Zwischenzahnradsatzes (30) und des Lastgangritzels (25b) parallel zueinander angeordnet sind.

5. Stützvorrichtung nach einem der vorhergehenden Ansprüche, wobei die Rotationsachsen des Lastgang-Zwischenzahnradsatzes (30) und des Lastgangritzels (25b) in unterschiedlichen horizontalen Ebenen liegen.

6. Stützvorrichtung nach Anspruch 5, wobei die Rotationsachse des Lastgang-Zwischenzahnradsatzes (30) in einer horizontalen Ebene liegt, die näher an der Rotationsachse der Abtriebswelle (12) liegt als die Rotationsachse des Lastgangritzels (25b).

7. Stützvorrichtung nach einem der vorhergehenden Ansprüche, wobei das Lastgangritzel (25b) an einem Ritzelkupplungsteil (25) festgelegt ist, welches vorzugsweise gemeinsam mit der Spindel (16) in einem Lagerelement (19) gelagert ist.

8. Stützvorrichtung nach einem der vorhergehenden Ansprüche, wobei ein Triebstück (27) oder eine Antriebswelle vorgesehen ist, das/die ausgelegt ist, eine Rotationskraft auf das Lastgangritzel (25b) vorzugsweise über einen Eingriff mit dem Ritzelkupplungsteil (25) auszuüben.

9. Stützvorrichtung nach einem der vorhergehenden Ansprüche, wobei an einem distalen Endbereich des Stützeninnenrohrs (14) ein Fuß (15) vorgesehen ist.

## Claims

1. A support device for commercial vehicles, such as trailers or semitrailers, comprising
a support outer pipe or tube (13) that can be fixed to a chassis of the commercial vehicle, and a support inner pipe or tube (14) that is mounted displaceably in the support outer pipe (13),
wherein the support inner pipe (14) is connected to a nut (17) that is in engagement with a spindle (16), which can be driven by a gearbox or transmission,
wherein the gearbox comprises an output shaft (12), a bevel gear step (20, 24) and a switchable region,
wherein the switchable region is composed of
a low gear wheel (22) and a fast gear pinion (23) that are fixed on the output shaft,
a low gear intermediate gear wheel set (30) having a low gear intermediate gear wheel (30a) and a low gear intermediate pinion (30c) that is in engagement with the low gear wheel (22),
a fast gear wheel (29) that is in engagement with the fast gear pinion (23), and
a low gear pinion (25b) that can optionally be brought in engagement with the low gear intermediate gear wheel (30a) or fast gear wheel (29), **characterized in that** the rotational axes of the low gear intermediate gear wheel set (30) and of the low gear pinion (25b) are arranged in different vertical planes and below the rotational axis of the output shaft (12), and that the rotational axis of the spindle (16) lies between the rotational axes of the low gear intermediate gear wheel set (30) and of the low gear pinion (25b).

2. The support device of claim 1, wherein the rotational axes of the low gear intermediate gear wheel set (30) and of the fast gear wheel (29) lie in different vertical planes and below the output shaft (12).

3. The support device of any one of the preceding claims, wherein the fast gear wheel (29) and the low gear pinion (25b) lie on the same rotational axis.

4. The support device of any one of the preceding claims, wherein the rotational axes of the output shaft (12), of the low gear intermediate gear wheel set (30), and of the low gear pinion (25b) are arranged parallel to each other.

5. The support device of any one of the preceding claims, wherein the rotational axes of the low gear intermediate gear wheel set (30) and of the low gear pinion (25b) lie in different horizontal planes.

6. The support device of claim 5, wherein the rotational axis of the low gear intermediate gear wheel set (30) lies in a horizontal plane closer to the rotational axis of the output shaft (12) than the rotational axis of the low gear pinion (25b).

7. The support device of any one of the preceding claims, wherein the low gear pinion (25b) is fixed to a pinion coupling part (25), which preferably is supported in a bearing element (19) together with the spindle (16).

8. The support device of any one of the preceding claims, wherein there is provided a driving piece (27) or an input shaft designed to exert a rotational force onto the low gear pinion (25b), preferably by engaging the pinion coupling part (25).

9. The support device of any one of the preceding claims, wherein there is provided a foot (15) at a distal end portion of the support inner pipe (14).

## Revendications

1. Dispositif de soutien pour véhicule utilitaire, tel que remorque ou semi-remorque, incluant
un tube extérieur de soutien (13) qui est susceptible d'être immobilisé sur un châssis du véhicule utilitaire, et un tube intérieur de soutien (14), qui est agencé déplaçable à l'intérieur du tube extérieur de soutien (13),
dans lequel le tube intérieur de soutien (14) est relié à un écrou (17) qui coopère avec une broche (16), laquelle est susceptible d'être entraînée via un mécanisme,
dans lequel le mécanisme comprend un arbre mené (12), un étage à engrenages coniques (20, 24), et une zone de commutation,
dans lequel la zone de commutation est formée
d'un pignon à marche sous charge (22) fixé sur l'arbre mené et d'un pignon à marche rapide (23),
d'un groupe d'engrenages intermédiaires à marche sous charge (30) avec un engrenage intermédiaire (30a) à marche sous charge et un pignon intermédiaire à marche sous charge (30c), qui est en engrènement avec l'engrenage à marche sous charge (22),
d'un engrenage à marche rapide (29), qui est en engrènement avec le pignon à marche rapide (23), et
d'un pignon à marche sous charge (25b) susceptible d'être amené sélectivement en engrènement avec l'engrenage intermédiaire à marche sous charge (30a) ou avec l'engrenage à marche rapide (29),
**caractérisé en ce que** les axes de rotation du groupe d'engrenages intermédiaires à marche sous charge (30) et du pignon à marche sous charge (25b) sont agencés dans des plans verticaux différents et au-dessous de l'axe de rotation de l'arbre mené (12), et **en ce que** l'axe de rotation de la broche (16) est situé entre les axes de rotation du groupe d'engrenages intermédiaires à marche sous charge (30) et du pignon à marche sous charge (25b).

2. Dispositif de soutien selon la revendication 1, dans lequel les axes de rotation du groupe d'engrenages intermédiaires à marche sous charge (30) et de l'engrenage à marche rapide (29) sont situés dans des plans verticaux différents et au-dessous de l'arbre mené (12).

3. Dispositif de soutien selon l'une des revendications précédentes, dans lequel l'engrenage à marche rapide (29) et l'engrenage à marche sous charge (25b) sont situés sur le même axe de rotation.

4. Dispositif de soutien selon l'une des revendications précédentes, dans lequel les axes de rotation de l'arbre mené (12), du groupe d'engrenages intermédiaires à marche sous charge (30) et du pignon à marche sous charge (25b) sont agencés parallèlement l'un à l'autre.

5. Dispositif de soutien selon l'une des revendications précédentes, dans lequel les axes de rotation du groupe d'engrenages intermédiaires à marche sous charge (30) et du pignon à marche sous charge (25b) sont situés dans des plans horizontaux différents.

6. Dispositif de soutien selon la revendication 5, dans lequel l'axe de rotation du groupe d'engrenages intermédiaires à marche sous charge (30) est situé dans un plan horizontal qui est situé plus proche de l'axe de rotation de l'arbre mené (12) que l'axe de rotation du pignon à marche sous charge (25b).

7. Dispositif de soutien selon l'une des revendications précédentes, dans lequel le pignon à marche sous charge (25b) est immobilisé sur une pièce d'accouplement de pignon (25), laquelle est de préférence montée conjointement avec la broche (16) dans un élément formant palier (19).

8. Dispositif de soutien selon l'une des revendications précédentes, dans lequel il est prévu une pièce d'entraînement (27) ou un arbre d'entraînement, laquelle/lequel est conçu(e) pour exercer une force de rotation sur le pignon à marche sous charge (25b), de préférence via un engagement avec la pièce d'accouplement de pignon (25).

9. Dispositif de soutien selon l'une des revendications précédentes, dans lequel un pied (15) est prévu au niveau d'une région d'extrémité distale du tube intérieur de soutien (14).
